# DEMANDE DE BREVET EUROPEEN

(11) **EP 2 161 147 A1**
(43) Date de publication de la demande: **10.03.2010**
(21) Numéro de dépôt: 09169489.3
(22) Date de dépôt: 04.09.2009
(51) Int. Cl.: B60G 21/05

(54) **Train arrière directeur pour véhicule automobile**

(30) Priorité: 05.09.2008 FR 0855950
(71) Demandeur: Peugeot Citroën Automobiles SA, 78140 Vélizy-Villacoublay (FR)
(72) Inventeur: Roy, Franck, 91700, Fleury Merogis (FR)

(57) **Abrégé**

Train arrière directeur en particulier pour véhicule automobile, comportant deux bras de suspension (21) oscillant dans un plan sensiblement longitudinal, reliés entre eux par un traverse déformable (44), chaque bras étant relié à un porte-moyeu (46) par un pivot, **caractérisé en ce que** le pivot se trouve maintenu suivant un axe (P) proche de la vertical, reliant un point d'articulation fixe (24) de la caisse (40), à un autre point d'articulation mobile (28) lié au bras de suspension.

## Description

La présente invention concerne un train arrière pour véhicule automobile, comprenant une commande de direction des roues arrière.

Les véhicules automobiles peuvent comporter une commande de braquage des roues arrière pour les rendre directrices, qui agit en coopération avec la commande de braquage des roues avant actionnée par le conducteur.

L'angle de braquage des roues arrière est généralement dépendant de la vitesse du véhicule. Pour les vitesses basses, les roues arrière sont orientées dans un sens opposé aux roues avant pour diminuer le rayon de braquage du véhicule et améliorer la maniabilité, par exemple pour les manoeuvres du véhicule. Pour les vitesses plus élevées, les roues arrière sont orientées dans le même sens que les roues avant pour améliorer la stabilité du véhicule, par exemple pour un changement rapide de file de circulation.

Un dispositif de braquage des roues arrière de ce type décrit notamment dans le document WO-A1-2004/108444, présente un bras de suspension arrière lié par une liaison pivotante à la caisse du véhicule, et oscillant dans un plan longitudinal, la caisse étant supportée par un ressort de suspension s'appuyant sur ce bras.

Les deux bras de suspension du train arrière sont reliés entre eux par une traverse flexible maintenant la géométrie de ces bras, tout en assurant par une déformation en torsion, une limitation de l'angle de roulis de la caisse.

Un porte-moyeu de roue est relié au bras de suspension par une liaison pivotante permettant un braquage des roues arrière. Le pivot comporte deux articulations supérieure et inférieure fixées à l'arrière du bras de suspension, et alignées suivant un axe sensiblement vertical définissant l'axe de pivotement.

Un vérin de commande du braquage de ce porte-moyeu est disposé transversalement, sa tige étant reliée par une rotule à un levier du porte-moyeu disposé perpendiculairement au vérin.

Le véhicule étant au repos sur un sol plat, l'axe de pivotement comporte une petite inclinaison dans le sens longitudinal du véhicule. L'angle ainsi formé par rapport à la verticale est appelé angle de chasse, il entraîne un décalage mesuré au sol, entre le centre du point de contact de la roue sur le sol, et le prolongement de l'axe de pivotement.

Ce décalage vers l'avant génère pour un train avant, un couple de rappel de la direction en position droite qui procure une stabilité de la direction en ligne droite, et aide à remettre les roues droites en sortie de virage.

Pour un axe de pivotement solidaire du bras de suspension arrière oscillant dans un plan longitudinal, l'angle de débattement du bras vient directement s'ajouter ou se soustraire à l'angle de chasse initial. L'angle de chasse oscille alors en fonction du débattement de ce bras lors du travail de la suspension, de part et d'autre d'une position sensiblement verticale entre deux limites extrêmes dépendant des butées de suspension.

Un inconvénient principal de ce dispositif de braquage des roues arrière, est que l'angle de chasse variant fortement en fonction des oscillations de la suspension, le rappel des roues en position droite varie aussi fortement, ce qui génère un couple de rappel plus ou moins élevé sur l'actionneur de commande.

Il faut donc dimensionner cet actionneur pour contrer un couple de rappel élevé, l'actionneur est plus volumineux et plus onéreux.

La présente invention a notamment pour but d'éviter ces inconvénients de la technique antérieure, et d'apporter à la réalisation d'un train arrière de véhicule automobile comportant un dispositif de braquage des roues, une solution simple, efficace et économique.

Elle propose à cet effet un train arrière directeur en particulier pour véhicule automobile, comportant deux bras de suspension oscillant dans un plan sensiblement longitudinal, reliés entre eux par un traverse déformable, chaque bras étant relié à un porte-moyeu par un pivot, **caractérisé en ce que** le pivot se trouve maintenu suivant un axe proche de la vertical, reliant un point d'articulation fixe de la caisse à un autre point d'articulation mobile lié au bras de suspension.

Un avantage principal du train arrière directeur selon l'invention, est qu'avec une distance verticale suffisante entre le point fixe de la caisse et le point mobile du bras, les oscillations du bras de suspension modifient très peu l'angle de chasse, et les efforts de rappel en ligne droite de la direction restent sensiblement constants.

De plus, le train arrière directeur selon l'invention peut comporter une ou plusieurs des caractéristiques suivantes, qui peuvent être combinées entre elles.

Avantageusement, le porte-moyeu est fixé sur une jambe de force qui relie le point d'articulation fixe de la caisse, au point d'articulation mobile du bras de suspension.

Le point d'articulation fixe peut se trouver sensiblement en haut du passage de roue.

Le point d'articulation mobile peut être fixé sur une partie arrière du bras de suspension.

Avantageusement, la jambe de force comporte une tige comprenant en partie supérieure le point d'articulation fixe, qui coulisse dans un fourreau lié au porte-moyeu recevant le moyeu de roue, pour former un guidage linéaire.

Le porte-moyeu peut être relié au bras de suspension par l'articulation mobile.

La jambe de force peut comporter un amortisseur hydraulique de freinage du débattement de la suspension.

Selon une caractéristique de l'invention, le levier de direction fixé sur le porte-moyeu et relié à un actionneur de commande de la direction, est placé à une hauteur nettement plus élevée que l'axe du moyeu de la roue.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est un schéma de principe de variation de l'angle de chasse suivant les débattements de la suspension, pour un dispositif de braquage selon l'art antérieur ;
- la figure 2 est un schéma de principe de variation de l'angle de chasse suivant les débattements de la suspension, pour un dispositif de braquage selon l'invention ; et
- la figure 3 est une vue en perspective d'un bras de suspension équipé, selon l'invention.

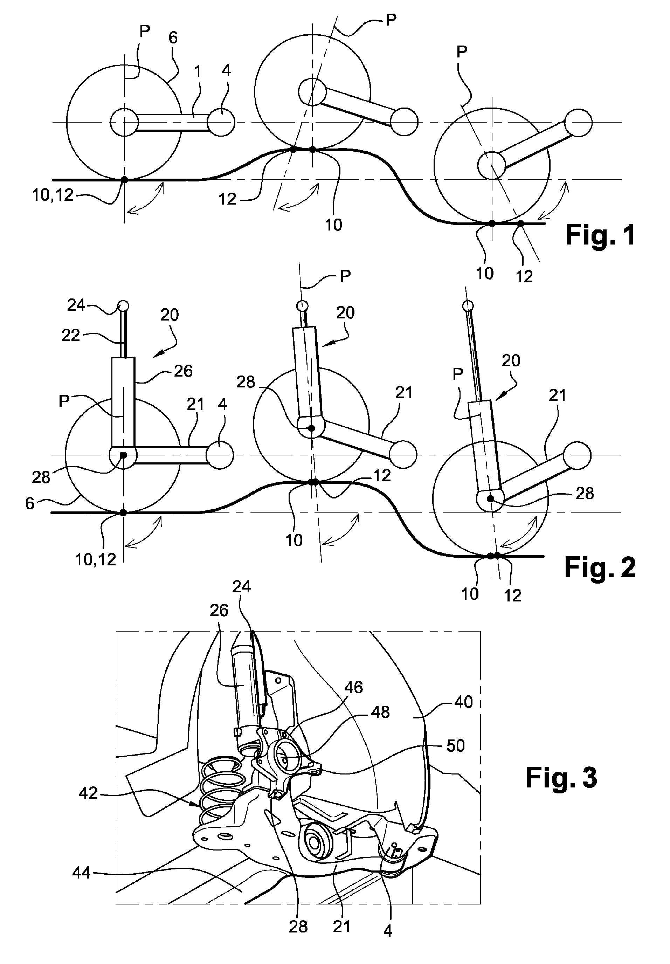

La figure 1 représente successivement dans une position neutre, une position basse où la suspension est comprimée et une position haute ou la suspension est détendue, un bras de suspension arrière 1 comprenant un tube disposé longitudinalement, comportant à l'avant une articulation pivotante 4 disposée sensiblement transversalement, de liaison avec la caisse du véhicule.

Pour simplifier l'explication la caisse du véhicule, et donc l'articulation 4, est représentée toujours à la même hauteur, et la hauteur du sol S varie.

Le bras de suspension 1 est relié à l'autre bras de suspension du train arrière par une traverse flexible non représentée, qui maintient la géométrie de ces bras tout en assurant par une déformation en torsion, une limitation de l'angle de roulis de la caisse. Les bras de suspension 1 supportent la caisse du véhicule par un dispositif de suspension non représenté.

Les deux bras 1 du train arrière guidées par la traverse déformable, oscillent dans un plan sensiblement longitudinal autour de leur articulation 4.

Le bras de suspension 1 comporte à l'arrière un pivot comportant un axe P, recevant un porte-moyeu supportant le moyeu de roue arrière 6, et un dispositif de freinage de cette roue.

Pour la position neutre, l'axe du pivot P est vertical. On a donc une concordance du point de contact 10 de la roue avec le sol, et du point de prolongement 12 au sol de l'axe de pivotement P. L'angle de chasse est nul, il n'induit pas de couple de rappel de la direction.

Pour la position basse, l'angle d'inclinaison du bras de suspension 1 est transmis à l'axe du pivot P qui s'incline vers l'avant, le point de prolongement 12 au sol de l'axe de pivotement, se trouve nettement en arrière du point de contact 10 de la roue avec le sol. Pour la position haute, de même l'axe du pivot P s'incline vers l'arrière, le point de prolongement 12 se trouve nettement en avant du point de contact 10.

On a donc pour ces deux dernières positions, une forte variation de l'angle de chasse qui induit des efforts pouvant être importants, sur l'actionneur de commande du braquage. L'actionneur qui peut être commun pour les deux roues arrière 6 ou dédoublé pour chaque roue, ainsi que la liaison le reliant au porte-moyeu, doivent être dimensionnés pour supporter cet effort. L'ensemble est donc plus volumineux, plus lourd et plus cher.

La figure 2 représente de la même manière, successivement dans des positions neutre, basse et haute, un bras de suspension arrière 21 comprenant un tube disposé longitudinalement, comportant à l'avant une articulation pivotante 4 de liaison avec la caisse du véhicule.

Les deux bras de suspension 1 reliés entre eux par une traverse flexible, oscillent dans un plan sensiblement longitudinal autour de leur articulation 4.

Une jambe de force télescopique 20 comprenant une tige 22 comportant une articulation supérieure fixe 24 reliée à la caisse du véhicule, coulisse dans un fourreau 26 comprenant une articulation inférieure mobile 28, relié à une partie arrière du bras de suspension 21. Les centres des articulations fixe 24 et mobile 28, passant par l'axe de la tige 22 et du fourreau 26, définissent un axe de pivot P.

Dans cet exemple, l'articulation mobile 28 se trouve sur l'axe de rotation de la roue 6.

Un porte-moyeu non représenté, supportant le moyeu de roue arrière 6 et un dispositif de freinage de cette roue, est fixé en bas du fourreau 26 de la jambe de force 20.

L'articulation mobile 28 permet une rotation du fourreau 26 autour de l'axe de pivot P, par rapport au bras de suspension 21, ce fourreau pouvant lui-même tourner par rapport à la tige 22. De cette manière, le porte-moyeu est guidé linéairement le long de l'axe P suivant les débattements de la suspension, tout en pouvant tourner autour de cet axe suivant la commande d'un actionneur de direction non représenté.

Pour la position neutre avec l'axe du pivot P vertical, le point de contact 10 de la roue sur le sol se superpose avec le point de prolongement 12 de l'axe de pivotement. L'angle de chasse est nul, il n'induit pas de couple de rappel de la direction.

Pour la position basse, le point d'articulation mobile 28 lié à la partie arrière du bras de suspension 21, se déplace très légèrement vers l'avant, l'axe du pivot P s'incline légèrement vers l'arrière. Le point 12 de prolongement au sol de l'axe de pivotement P, se trouve un peu en avant du point de contact 10 de la roue avec le sol.

De la même manière pour la position haute, le point d'articulation mobile 28 se déplace aussi très légèrement vers l'avant, l'axe du pivot P s'incline légèrement vers l'arrière. Le point 12 de prolongement au sol de l'axe de pivotement P, se trouve aussi un peu en avant du point de contact 10 de la roue avec le sol.

On a donc pour ces deux dernières positions, une faible variation de l'angle de chasse qui n'induit quasiment pas de variation d'effort sur l'actionneur de commande du braquage.

On notera que l'articulation supérieure fixe 24 oscille suivant un faible d'angle d'oscillation, ce qui facilite sa réalisation.

L'actionneur qui peut être commun pour les deux roues arrière 6, ainsi que les organes de liaison, peuvent être prévus pour des efforts limités. Ils sont plus petits, plus légers et plus économiques.

La figure 3 détaille un train arrière directeur suivant le principe présenté figure 2. La caisse d'un véhicule 40 comprend une articulation pivotante 4 d'un bras de suspension arrière 21, lié à un autre bras du train arrière par une traverse flexible 44.

Dans la partie supérieure du passage de roue, se trouve un point d'articulation fixe 24 recevant le haut d'une tige qui coulisse dans un fourreau 26. En partie basse de ce fourreau 26 se trouve le porte-moyeu 46 supportant le moyeu de roue centré sur un axe 48, ce porte-moyeu étant relié au bras de suspension 21 par l'articulation mobile inférieure 28 qui se trouve en dessous du porte-moyeu.

On réalise ainsi un espacement assez important des points d'articulation fixe 24 et mobile 28, qui procure une faible inclinaison de l'axe du pivot P lors des débattements de la suspension.

Le coulissement de la tige dans le fourreau 26 se fait sans jeu et avec une grande rigidité, pour réaliser un guidage linéaire précis du porte-moyeu 46 et donc de la roue.

Un levier de direction 50 lié au porte-moyeu 46, est relié à un actionneur non représenté qui commande la rotation de ce porte-moyeu autour de l'axe de pivotement P. Dans cet exemple, le levier de direction 50 est placé à la hauteur de l'axe 48 du moyeu de la roue.

On notera que le porte-moyeu 46 et donc son levier de direction 50, se déplaçant lors du débattement des suspensions suivant un axe P qui reste sensiblement parallèle à lui-même, ce levier peut être placé plus haut suivant cet axe P. L'actionneur de commande de direction, peut facilement lui aussi être placé plus haut dans la caisse 40 du véhicule.

La caisse 40 du véhicule est portée par un ressort de suspension 42 qui prend appui sur le bras de suspension 21. Un amortisseur hydraulique freinant les oscillations de la suspension, peut être inclus dans la jambe de force 20 en utilisant le coulissement de la tige 22 dans le fourreau 26 pour former un vérin hydraulique.

On réalise ainsi de manière simple et avec peu de composants, un guidage précis de la roue arrière tout en permettant un angle de braquage. L'angle de chasse de cette direction est sensiblement constant suivant une valeur faible, les efforts s'exerçant sur les actionneurs de direction restent limités.

## Revendications

1. Train arrière directeur en particulier pour véhicule automobile, comportant deux bras de suspension (21) oscillant dans un plan sensiblement longitudinal, reliés entre eux par une traverse déformable (44), chaque bras étant relié à un porte-moyeu (46) par un pivot, le pivot se trouvant maintenu suivant un axe (P) proche de la verticale, reliant un point d'articulation fixe (24) de la caisse (40), à un autre point d'articulation mobile (28) lié au bras de suspension, **caractérisé en ce que** le pivot est solidaire du bras de suspension

2. Train arrière directeur selon la revendication 1, **caractérisé en ce que** le porte-moyeu (46) est fixé sur une jambe de force (20) qui relie le point d'articulation fixe (24) de la caisse (40), au point d'articulation mobile (28) du bras de suspension (21).

3. Train arrière directeur selon la revendication 2, **caractérisé en ce que** le point d'articulation fixe (24) se trouve sensiblement en haut du passage de roue.

4. Train arrière directeur selon la revendication 2 ou 3, **caractérisé en ce que** le point d'articulation mobile (28) est fixé sur une partie arrière du bras de suspension (21).

5. Train arrière directeur selon l'une des revendications 2 à 4, **caractérisé en ce que** la jambe de force (20) comporte une tige (22) comprenant en partie supérieure le point d'articulation fixe (24), qui coulisse dans un fourreau (26) lié au porte-moyeu (46) recevant le moyeu de roue, pour former un guidage linéaire.

6. Train arrière directeur selon la revendication 5, **caractérisé en ce que** le porte-moyeu (46) est relié au bras de suspension (21) par l'articulation mobile (28).

7. Train arrière directeur selon la revendication 5 ou 6, **caractérisé en ce que** la jambe de force (20) comporte un amortisseur hydraulique de freinage du débattement de la suspension.

8. Train arrière directeur selon l'une quelconque des revendications précédentes, **caractérisé en ce qu'**un levier de direction (50) fixé sur le porte-moyeu (46) et relié à un actionneur de commande de la direction, est placé à une hauteur nettement plus élevée que l'axe (48) du moyeu de la roue.
